# EUROPEAN PATENT SPECIFICATION

(11) **EP 1 123 486 B1**
(45) Date of publication and mention of the grant of the patent: **08.12.2004**
(21) Application number: 99953088.4
(22) Date of filing: 07.10.1999
(51) Int. Cl.: G01C 19/72

(54) **WINDING PATTERN FOR FIBER OPTIC COILS**
WICKLUNG FÜR FASEROPTISCHE SPULEN
MOTIF DE BOBINAGE POUR FIBRES OPTIQUES

(30) Priority: 19.10.1998 US 174833
(43) Date of publication of application: 16.08.2001
(73) Proprietor: Honeywell Inc., Minneapolis Minnesota 55413 (US)
(72) Inventor: KALISZEK, Andrew, W., Phoenix, AZ 85022 (US)
(74) Representative: Brunner, Michael John
(86) International application number: PCT/US1999/023381
(87) International publication number: WO 2000/023765

(56) References cited:
- EP-A- 0 292 103
- EP-A- 0 851 213
- WO-A-95/17693
- US-A- 4 752 043
- US-A- 5 181 270
- US-A- 5 492 281

## Description

### TECHNICAL FIELD OF THE INVENTION

The present invention relates to fiber optic devices such as fiber optic rate sensors.

### BACKGROUND OF THE INVENTION

A fiber optic rate sensor is frequently used in advanced global positioning and inertial guidance systems to sense rotation. A fiber optic rate sensor ordinarily comprises an interferometer which includes a light source, a beam splitter, a detector, and an optical path which is mounted on a platform. Light from the light source is split by the beam splitter into two light beams which are directed to opposite ends of the optical path. The two light beams counterpropagate around the optical path and, as the light beams exit the optical path, they are recombined. The recombined light beams are applied to a detector.

If the optical path rotates, the distance traveled by one of the light beams is greater than distance traveled by the other light beam, so that there is a phase difference between the two light beams at their optical path exit points. A sensing circuit connected to the detector determines this phase difference as an indication of the extent and direction of rotation.

The optical path of a fiber optic rate sensor is provided by an optical fiber which is typically coiled around a spool or hub to form a winding configuration. The winding configuration usually has multiple layers where each layer contains multiple turns. Although many different winding configurations are known, coils used in fiber optic rotation sensors are typically wound as quadrupoles or as interleaved patterns.

In order to form a quadrupole, a first end of a continuous optical fiber is wound onto a first intermediate spool, and a second end of the continuous optical fiber is wound onto a second intermediate spool. Then, the optical fiber on the first intermediate spool is used to wind a first layer of turns in a clockwise direction around the hub, the optical fiber on the second intermediate spool is used to wind a second layer of turns in a counterclockwise direction over the first layer, the optical fiber on the second intermediate spool is used to wind a third layer of turns oven the second layer of turns, and the optical fiber on the first intermediate spool is used to wind a fourth layer of turns over the third layer of turns.

If "+" and "-" are used to designate the first and second ends of the optical fiber, respectively, the resulting quadrupole winding pattern has a + - - + winding configuration, where + indicates a layer wound from the first end of the optical fiber and where - indicates a layer wound from the second end of the optical fiber. Ideally, the length of optical fiber in the "+" layers is equal to the length of optical fiber in the "-" layers. This quadrupole winding pattern may be repeated as often as desired for a fiber optic rate sensor. Accordingly, if a second quadrupole is wound with + - - + layers about the first quadrupole, the resulting two quadrupole arrangement has a + - - + + - - + winding pattern.

It is also known to wind a reverse quadrupole from the "+" and "-" ends of the optical fiber. In this case, the reverse quadrupole has a + - - + - + + - winding pattern and is generally referred to as an octupole. This octupole winding pattern may be repeated as often as desired for a fiber optic rotation sensor. Indeed, a reverse octupole may be wound according to the following winding pattern: + - - + - + + - - + + - + - - +.

In order to form a coil having an interleaved winding pattern, one or more layers of the coil are wound as alternating turns from first and second ends of an optical fiber. Accordingly, in such a layer, odd numbered turns are wound from a first end of the optical fiber, and even numbered turns are wound from a second end of the optical fiber. The result of such winding is that each turn (other than the outer turns) of an interleaved layer is wound from one end of an optical fiber and is sandwiched between two turns wound from the other end of the optical fiber.

Not all layers of a coil having an interleaved winding pattern are required to be wound with the interleaved winding pattern. For example, all of the turns of the innermost layer of the coil can be wound from the same end of the optical fiber, or one or more groups of adjacent turns of the innermost layer of the coil can be wound from the first end of the optical fiber and one or more other groups of adjacent turns of the innermost layer of the coil can be wound from the second end of the optical fiber.

In winding coil patterns, valleys are created between adjacent turns of the first layer. These valleys provide nesting places for the turns wound in the second layer, and the turns of the second layer form valleys providing nesting places for the turns wound in the third layer, and so on. However, substantial force is usually required in order to nest the turns of one layer into the valleys provided by the adjacent turns of the previous layer. Because of this force, it is likely that the fiber in each turn will deform and push other turns that are adjacent in the same layer. Fiber deformation can cause displacement of turns of the fiber optic sensor.

For example, Figure I shows a portion of a fiber optic coil 10 having first and second layers 12 and 14. The tension that is applied to the optical fiber during the winding process deforms the fiber such as at turns 16, 18, 20, and 22 from a circular shape to an oval shape. As a result, there may not be enough space to accommodate all turns with the deformed dimension. Thus, one or more fiber turns, such as the turn 22, will be misplaced from the valleys created by adjacent turns of the previous layer.

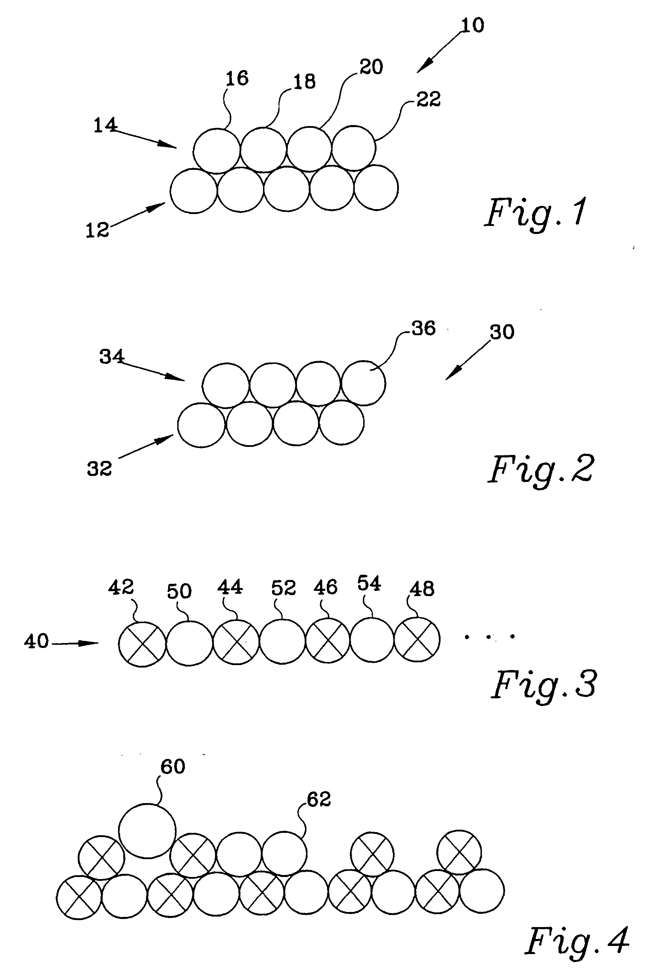

Moreover, it is known that the diameter of the optical fiber along its length can fluctuate from a nominal diameter. As shown by a fiber optic coil 30 in Figure 2, if the size of the diameter of the optical fiber that is used to wind a first layer 32 increases slightly during the winding of a second layer 34, a build-up of cumulative fiber placement error can result. As a result, one or more fiber turns, such as a turn 36, will again be misplaced from the valleys created by adjacent turns of the previous layer.

Furthermore, in winding an interleaved pattern, alternating adjacent turns in a layer are wound from the first and second ends of an optical fiber. A layer 40 having this interleaved winding pattern is shown in Figure 3 where a first end of an optical fiber is used to wind turns 42, 44, 46, 48, and so on, and a second end of the optical fiber is used to wind turns 50, 52, 54, and so on. As can be seen from Figure 3, each turn (except for outer turns) wound from one end of the optical fiber is sandwiched between two turns wound from the other end of the optical fiber. However, as shown in Figure 4, fluctuating buffer diameter and/or tension applied to the optical fiber during winding can also create winding errors with an interleaved winding pattern. These errors include fiber climbing such as at a turn 60, turn misplacement such as at a turn 62, and missing turns.

Accordingly, as described above, turns of a fiber optic coil may not be positioned as intended with the result that thermal transients and vibrations may cause performance of the fiber optic sensor to degrade.

The coil wound according to the teachings of U.S. Patent No. 5,492,281 does not address this problem. As disclosed in this patent, a base layer of a filament pack is wound so as to isolate the filament pack from the dimensional changes of the bobbin upon which the filament pack is wound, so as to match the expansion coefficient of the filament pack, so as to serve as a template for the filament pack, and so as to compensate for filament pack dimension changes due to absorption or desorption of gaseous or liquid material The template function is not intended to prevent the turns in a second layer from touching one another. Rather, the template function involves matching the dimensions of the filament in the base layer to the dimensions of the filament in the filament pack so that a desired winding pattern is obtained.

The coil wound according to the teachings of document EP-A-0 292 103, which is a European Patent Application, which was published on 23 November 1988, and which discloses an orthogonally wound coil having a plurality of turns wound in a plurality of layers, also does not address this problem. Each turn of this orthogonally wound coil has a first portion which is perpendicular to the axis of the coil and a second portion which is at an angle with this axis. The first portions of the turns in each layer are parallel to one another, and the second portions of the turns in each layer are parallel to one another. The turns of a layer fit into grooves formed by turns in a lower layer.

The present invention is directed to a fiber optic device, as disclosed in the appended claims, that allows some space between adjacent turns in a layer so as to mitigate or avoid the thermal transient and vibration problems of the prior art.

### BRIEF DESCRIPTION OF THE DRAWINGS

These and other features and advantages of the present invention will become more apparent from a detailed consideration of the invention when taken in conjunction with the drawings in which:
Figure 1 illustrates winding errors caused by applying tension to an optical fiber during winding of a fiber optic coil;
Figure 2 illustrates winding errors caused by fluctuating fiber diameter;
Figure 3 illustrates an interleaved winding pattern;
Figure 4 illustrates winding errors in an interleaved winding pattern caused by applying tension to an optical fiber during winding of a fiber optic coil and/or by fluctuating fiber diameter;
Figure 5 illustrates a general winding pattern that incorporates the present invention;
Figure 6 illustrates a quadrupole winding pattern that incorporates the present invention;
Figure 7 illustrates an octupole winding pattern that incorporates the present invention; and,
Figure 8 illustrates an interleaved winding pattern that incorporates the present invention.

### DETAILED DESCRIPTION

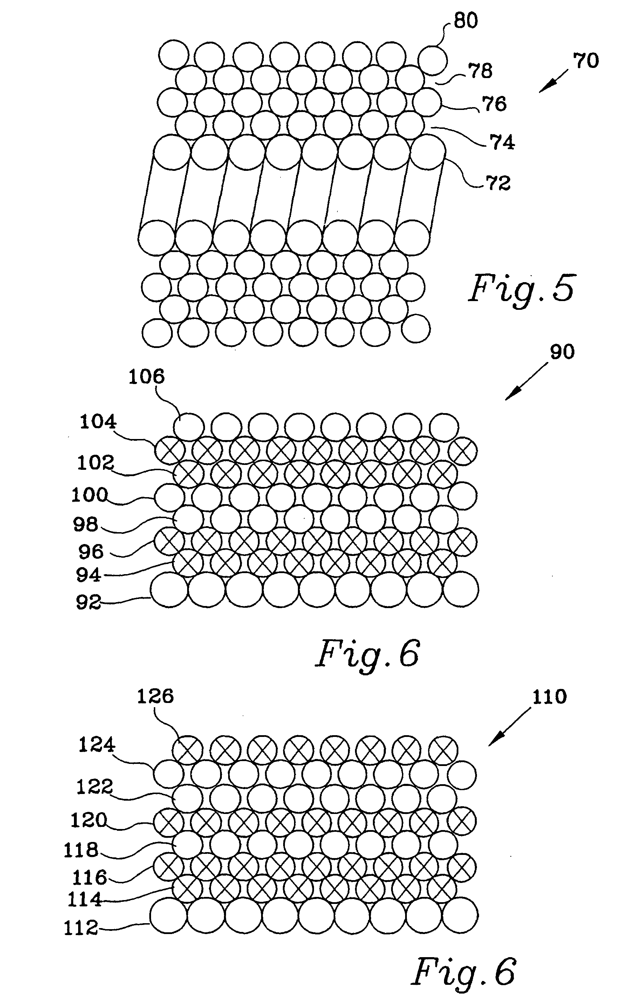

A fiber optic coil 70 as illustrated in Figure 5 includes layers 72, 74, 76, 78, and 80. However, as discussed below, the fiber optic coil 70 may include any number of layers as desired. Each of the layers 72, 74, 76, 78, and 80 includes a plurality of turns wound from an optical fiber. However, the portion of optical fiber that is used to wind the turns in the layer 72 has an outer diameter that is larger than the outer diameter of the portion of optical fiber used to wind the layers 74, 76, 78, and 80. The difference between the outer diameter of the portion of optical fiber used to wind the turns in the layer 72 and the outer diameter of the portion of optical fiber used to wind the turns in the layers 74, 76, 78, 80, although exaggerated in Figure 5, may be only large enough so that the adjacent turns in each of the layers 74, 76, 78, and 80 are non-touching. Accordingly, the layer 72 may be wound using a portion of optical fiber having a outer diameter which is only slightly larger than the outer diameter of the portion of optical fiber that is used to wind the turns in subsequent layers.

As each layer is wound, an adhesive may be applied in order to bond the turns in the layer together and to bond one layer over a previously wound layer.

The turns of the layer 72 may or may not be a functional part of the fiber optic coil 70. If the turns of the layer 72 are to be a functional part of the fiber optic coil 70, then there are a number ways of providing the turns of the layer 72 with a larger outer diameter than the turns of the remaining layers. For example, a first portion of larger diameter optical fiber may be spliced onto a second portion of smaller diameter optical fiber so that the layer 72 is wound from the first portion of optical fiber and the remaining layers are wound from the second portion of optical fiber. As another example, a first portion of optical fiber may be pre-coated to enlarge its diameter relative to the diameter of a second portion of the optical fiber so that the layer 72 is wound from the first portion of the optical fiber and the remaining layers are wound from the second portion of the optical fiber. In both examples, the optical fiber at one end of the layer 72 is optically connected to the optical fiber beginning the layer 74, and the optical fiber at the other end of the layer 72 is optically connected to an end of the optical fiber beginning the layer 78, assuming that the layers 72, 74, 76, and 78 are to form a quadrupole winding configuration. If some other winding configuration is to be provided for the fiber optic coil 70, then the ends of the layer 72 should be optically connected to appropriate layers of the fiber optic coil 70.

If the turns of the layer 72 are not to be a functional part of the fiber optic coil 70, then the optical fiber of the layer 72 is not optically connected to the optical fiber of any other layer.

Because the diameter of the optical fiber that is used to wind the turns of the layer 72 is larger than the diameter of the optical fiber that is used to wind the turns in the succeeding layers of the fiber optic coil 70, the adjacent turns in each of the layers 74, 76, 78, 80, etc. of the fiber optic coil 70 are non-touching. Indeed, a small space is provided between the adjacent turns. Accordingly, the turns in the layer 74 do not touch each other, the turns in the layer 76 do not touch each other, and so forth for subsequent layers of the fiber optic coil 70. Therefore, the coil structure is free from winding defects, and the performance of the fiber optic coil 70 in thermal transient and vibration conditions is substantially enhanced over prior art fiber optic coils. The winding configuration provided by the fiber optic coil 70 permits a high degree of consistency in the coil winding pattern and structural integrity of the fiber optic coil 70.

The fiber optic coil 70 has substantial benefits. For example, the fiber optic coil 70 need not be supported by a hub and instead may be a homogenous freestanding coil structure consisting only of optical fiber and adhesive. Also, it is known to provide grooves around a hub upon which a fiber optic coil is wound in order to separate the turns in each layer so as to provide a gap between adjacent turns. The present invention, however, eliminates the need for such grooved hubs. Moreover, grooved winding fixtures are also eliminated. Furthermore, the present invention permits the use of non-stick coated winding fixtures.

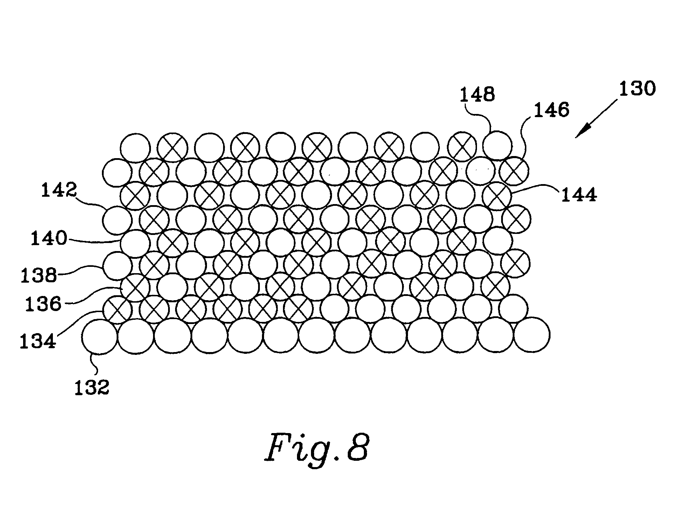

The optical fiber of the fiber optic coil 70 may be wound in any type of winding configuration. Examples of three such winding configurations are shown in Figures 6, 7, and 8. A winding configuration 90 shown in Figure 6 has a quadrupole winding arrangement. A winding configuration 110 shown in Figure 7 has a reverse quadrupole or octupole winding configuration. A winding configuration 130 shown in Figure 8 has an interleaved winding pattern. It is assumed that the first layer of turns in each of the winding configurations 90 and 110 is functional and that the first layer of turns in the winding configuration 130 is not functional. Thus, as explained above, the first layer of turns of a winding configuration may be either functional or non-functional.

The winding configuration 90 includes layers 92, 94, 96, 98, 100, 102, 104, and 106. The turns of the layers 92, 98, 100, and 106 are wound from a first end of an optical fiber and the turns of the layers 94, 96, 102, and 104 are wound from a second end of the optical fiber. A portion of the first end of the optical fiber that is used to wind the turns of the layer 92 has an outer diameter that is larger than the outer diameter of (i) the second end of the optical fiber which is used to wind the layers 94, 96, 102, and 104 and (ii) the remaining portion of the first end of the optical fiber which is used to wind the layers 98, 100, and 106.

Accordingly, the layer 94 includes turns wound from the second end of the optical fiber, the layer 96 includes turns wound from the second end of the optical fiber, the layer 98 includes turns wound from the first end of the optical fiber, the layer 100 includes turns wound from the first end of the optical fiber, the layer 102 includes turns wound from the second end of the optical fiber, the layer 104 includes turns wound from the second end of the optical fiber, and the layer 106 includes turns wound from the first end of the optical fiber. One end of the optical fiber in the layer 92 is optically connected to an end of the optical fiber in the layer 94, and the other end of the optical fiber in the layer 92 is optically connected to an end of the optical fiber in the layer 98 so that the layers 92, 94, 96, and 98 form a first quadrupole winding configuration. Similarly, the layers 100, 102, 106, and 104 may be arranged to form a second quadrupole winding configuration. Additional quadrupoles may also be provided as desired.

It should be noted that, if the layer 92 is not a functional part of the winding configuration 90, then the layer 94 includes turns wound from a first end of an optical fiber, the layer 96 includes turns wound from a second end of the optical fiber, the layer 98 includes turns wound from the second end of the optical fiber, and the layer 100 includes turns wound from the first end of the optical fiber. The layers 94, 96, 98, and 100 thus form a quadrupole. Subsequent layers may be wound in the same quadrupole winding configuration.

The winding configuration 110 includes layers 112, 114, 116, 118, 120, 122, 124, and 126. The turns of the layers 112, 118, 122, and 124 are wound from a first end of an optical fiber and the turns of the layers 114, 116, 120, and 126 are wound from a second end of the optical fiber. A portion of the first end of the optical fiber that is used to wind the turns of the layer 112 has an outer diameter that is larger than the outer diameter of (i) the second end of the optical fiber which is used to wind the layers 114, 116, 120, and 126 and (ii) the remaining portion of the first end of the optical fiber which is used to wind the layers 118, 122, and 124.

Accordingly, the layer 114 includes turns wound from the second end of the optical fiber, the layer 116 includes turns wound from the second end of the optical fiber, the layer 118 includes turns wound from the first end of the optical fiber, the layer 120 includes turns wound from the second end of the optical fiber; the layer 122 includes turns wound from the first end of the optical fiber, the layer 124 includes turns wound from the first end of the optical fiber, and the layer 126 includes turns wound from the second end of the optical fiber. One end of the optical fiber in the layer 112 is optically connected to an end of the optical fiber in the layer 114, and the other end of the optical fiber in the layer 112 is optically connected to an end of the optical fiber in the layer 118 so that the layers 112, 114, 116, and 118 form a first quadrupole winding configuration. Similarly, the layers 120, 122, 124, and 126 may be arranged to form a reverse quadrupole winding configuration so that the layers 112, 114, 116, 118, 120, 122, 124, and 126 form an octupole. Additional octupoles may also be provided as desired. Indeed, the turns in the layers 112-126 may be reversed in the next eight layers of a fiber optic coil and so on.

It should be noted that, if the layer 112 is not a functional part of the winding configuration 110, then the layer 114 includes turns wound from a first end of an optical fiber, the layer 116 includes turns wound from a second end of the optical fiber, the layer 118 includes turns wound from the second end of the optical fiber, and the layer 120 includes turns wound from the first end of the optical fiber. The layers 94, 96, 98, and 100 thus form a quadrupole. A subsequent four layers may be wound as a reverse quadrupole to form an octupole with the layers 94, 96, 98, and 100. A next eight layers may be wound as a reversed octupole, and so on.

The winding configuration 130 includes layers 132, 134, 136, 138, 140, 142, 144, 146, and 148. The turns of the layer 132 are wound from a first optical fiber, and the turns of the layers 134, 136, 138, 140, 142, 144, 146, and 148 are wound from asecond optical fiber. Accordingly, the turns in the layer 132 are not a functional part of the winding configuration 130 although, as discussed above, the turns in the layer 132 could be functional. The first optical fiber that is used to wind the turns of the layer 132 has an outer diameter that is larger than the outer diameter of the second optical fiber which is used to wind the layers 134, 136, 138, 140, 142, 14d, 146, and 148.

As shown in Figure 8, the layers 134-148 include alternate turns wound from the first and second ends of the second optical fiber. A specific interleaved winding pattern for the layers 134-148 is shown in Figure 8, although other interleaved winding patterns can be employed. Examples of interleaved winding patterns are taught in U.S. Application 08/668,485, which was filed on June 21, 1996, and which has been allowed by the U.S. patent and Trademark Office.

Certain modifications of the present invention have been discussed above. Other modifications will occur to those practicing in the art of the present invention. For example, the present invention has been described above in the context of a fiber optic rate sensor. However, the present invention may also be used in connection with other fiber optic devices as well.

## Claims

1. A fiber optic coil (70, 90, 110, or 130) wound from optical fiber, wherein the fiber optic coil (70, 90, 110, or 130) has first (72, 92, 112, or 132) and second (74, 94, 114, or 134) layers of turns wound from the optical fiber, wherein the optical fiber in the first layer of turns (72, 92,112, or 132) has a first diameter, wherein the turns of the second layer of turns (74, 94, 114, or 134) are wound around the turns of the first layer of turns, wherein the optical fiber in the second layer of turns (74, 94,114, or 134) has a second diameter, the fiber optic coil (70, 90, 110, or 130) being **CHARACTERIZED in that**:
the first diameter is larger than the second diameter so as to prevent the turns in the second layer (74, 94, 114, or 134) from substantially touching one another.

2. The fiber optic coil of claim 1 wherein the turns in the first layer of turns (72, 92, 117, or 132) are adjacent turns, wherein the first layer of turns (72, 92, 112, or 132) has valleys between the adjacent turns, and wherein the turns of the second layer of turns (74, 94, 114, or 134) occupy the valleys between the adjacent turns of the first layer of turns (72, 92, 112, or 132).

3. The fiber optic coil of 1 wherein the first (72, 92, 112, or 132) and second (74, 94, 114, or 134) layers of turns are wound on a hub.

4. The fiber optic coil of claim 1 wherein the first (72, 92, 112, or 132) and second (74, 94, 114, or 134) layers of turns are free standing.

5. The fiber optic coil of claim 4 wherein the turns of the first (72, 92, 112, or 132) and second (74, 94, 114, or 134) layers of turns are bonded together by an adhesive.

6. The fiber optic coil of claim 1 wherein the turns of the first (72, 92, 112, or 132) and second (74, 94, 114, or 134) layers of turns are optically connected in a sensing path.

7. The fiber optic coil of claim 1 further comprising third (76, 96, 116, or 136), fourth (78, 98, 118, or 138), and fifth (80, 100, 120, or 140) layers of turns, wherein the first layer of turns (72, 92, 112, or 132) is wound from a first portion of optical fiber, wherein the first portion of optical fiber has the first diameter, wherein the first layer of turns (72, 92, 112, or 132) has valleys, wherein the second layer of turns (74, 94, 114, or 134) is wound from a second portion of optical fiber, wherein the second portion of optical fiber has the second diameter, wherein the second layer of turns (74, 94, 114, or 134) has valleys, wherein the turns of the second layer of turns (74, 94, 114, or 134) occupy the valleys of the first layer of turns (72, 92, 112, or 132), wherein the third layer of turns (76, 96,116, or 136) is wound from the second portion of optical fiber, wherein the third layer of turns (76, 96, 116, or 136) has valleys, wherein the turns of the third layer of turns (76, 96, 116, or 136) occupy the valleys of the second layer of turns (74, 94, 114, or 134), wherein the fourth layer of turns (78, 98, 118, or 138) is wound from the second portion of optical fiber, wherein the fourth layer of turns (78, 99, 118, or 138) has valleys, wherein the turns of the fourth layer of turns (78, 98, 118, or 138) occupy the valleys of the third layer of turns (76, 96, 116, or 136), wherein the fifth layer of turns (80, 100, 120, or 140) is wound from the second portion of optical fiber, and wherein the turns of the fifth layer of turns (80, 100, 120, or 140) occupy the valleys of the fourth layer of turns (78, 98, 118, or 138).

8. The fiber optic coil of claim 7 wherein the first (72, 92, 112, or 132), second (74, 94, 114, or 134), third (76, 96, 116, or 136), fourth (78, 98, 118, or 13 8), and fifth (80, 100, 120, or 140) layers of turns are wound on a hub.

9. The fiber optic coil of claim 7 wherein the first (72, 92, 112, or 132), second (74, 94, 114, or 134), third (76, 96, 116, or 136), fourth (78, 98, 118, or 138), and fifth (80, 100, 120, or 140) layers of turns are free standing.

10. The fiber optic coil of claim 9 wherein the turns of the first (72, 92, 112, or 132), second (74, 94, 114, or 134), third (76, 96, 116, or 136), fourth (78, 98, 118, or 138), and fifth (80, 100, 120, or 140) layers of turns are bonded together by an adhesive.

11. The fiber optic coil of claim 7 wherein the turns of the first (72, 92, 112, or 132), second (74, 94, 114, or 134), third (76, 96, 116, or 136), fourth (78, 98, 118, or 138), and fifth (80, 100, 120, or 140) layers of turns are optically connected in a sensing path.

12. The fiber optic coil of claim 7 wherein the turns of the second (74, 94, 114, or 134), third (76, 96, 116, or 136), fourth (78, 98, 118, or 138), and fifth (80, 100, 120, or 140) layers of turns, but not the turns of the first layer of turns (72, 92, 112, or 132), are optically connected in a sensing path.

13. The fiber optic coil of claim 7 wherein the first (72, 92, 112, or 132), second (74, 94, 114, or 134), third (76, 96, 116, or 136), and fourth (78, 98, 118, or 138) layers of turns are wound so as to form a quadrupole.

14. The fibef optic coil of claim 7 wherein the second (74, 94, 114, or 134), third (76, 96, 116, or 136), fourth (78, 98, 118, or 138), and fifth (80, 100, 120, or 140) layecs of turns are wound so as to form a quadrupole.

15. The fiber optic coil of claim 7 wherein the second (74, 94, 114, or 134), third (76, 96, 116, or 136), fourth (78, 98, 118, or 138), and fifth (80, 100, 120, or 140) layers of turns are wound in an interleaved winding pattern.

16. The fiber optic coil of claims 1 and 7 wherein the turns of the first layer of turns (72, 92, 112, or 132) are touching.

17. The fiber optic coil of claims 1 and 7 wherein the first layer of turns (72, 92, 112, or 132) is a radially innermost layer of turns.

18. The fiber optic coil of claim 1 further comprising third (136) through ninth (148) layers of adjacent turns wound from an optical fiber having the second diameter, wherein the second through ninth layers of adjacent turns are wound in succession over the first layer (132) of adjacent turns.

19. The fiber optic coil of claim 18 wherein the turns of the first layer of turns (132) are touching.

20. The fiber optic coil of claim 18 wherein the first (132) through ninth (148) layers of turns are wound on a hub.

21. The fiber optic coil of claim 18 wherein the first (132) through ninth (148) layers of turns are free standing.

22. The fiber optic coil of claim 21 wherein the turns of the first (132) through ninth (148) layers of turns are bonded together by an adhesive.

23. The fiber optic coil of claim 18 wherein the turns of the first (132) through ninth (148) layers of turns are optically connected in a sensing path.

24. The fiber optic coil of claim 18 wherein the turns of the second (134) through ninth (148) layers of turns, but not the turns of the first layer of turns (132), are optically connected in a sensing path.

25. The fiber optic coil of claim 18 wherein the second (134), third (136), fourth (138), and fifth (140) layers of turns are wound as a first quadrupole, and wherein the sixth (142), seventh (144), eighth (146), and ninth (148) layers of turns are wound as a second quadrupole.

26. The fiber optic coil of claim 25 wherein the second quadrupole is a reverse of the first quadrupole.

27. The fiber optic coil of claim 18 wherein the first (132), second (134), third (136), and fourth (138) layers of turns are wound as a first quadrupole, and wherein the fifth (140), sixth (142), seventh (144), and eighth (146) layers of turns are wound as a second quadrupole.

28. The fiber optic coil of claim 27 wherein the second quadrupole is a reverse of the first quadrupole.

29. The fiber optic coil of claim 18 wherein at least one of the second (134) through ninth (148) layers of turns is wound in an interleaved winding pattern.

30. The fiber optic coil of claim 18 wherein the second (134) through ninth (148) layers of turns are wound in an interleaved winding pattern.

31. The fiber optic coil of claim 18 wherein the first layer of turns (132) is a radially inner most layer of turns.

32. The fiber optic coil of claim 18 wherein the optical fiber having the first diameter is spliced to the optical fiber having the second diameter.

33. The fiber optic coil of claim 18 wherein the optical fiber having the first diameter is an enlarged portion of the optical fiber having the second diameter.

## Patentansprüche

1. Faseroptische Spule (70, 90, 110 oder 130), aus optischer Faser gewickelt, wobei die faseroptische Spule (70, 90, 110 oder 130) erste (72, 92, 112 oder 132) und zweite (74, 94, 114 oder 134) Wicklungslagen aufweist, die aus der optischen Faser gewickelt sind, wobei die optische Faser in der ersten Wicklungslage (72, 92, 112 oder 132) einen ersten Durchmesser aufweist, wobei die Wicklungen der zweiten Wicklungslage (74, 94, 114 oder 134) um die Wicklungen der ersten Wicklungslage herum gewickelt sind, wobei die optische Faser in der zweiten Wicklungslage (74, 94, 114 oder 134) einen zweiten Durchmesser aufweist, wobei die faseroptische Spule (70, 90, 110 oder 130) **dadurch gekennzeichnet ist, dass**:
der erste Durchmesser größer ist als der zweite Durchmesser, um zu verhindern, dass die Wicklungen in der zweiten Wicklungslage (74, 94, 114 oder 134) im Wesentlichen sich gegenseitig berühren.

2. Faseroptische Spule nach Anspruch 1, wobei die Wicklungen in der ersten Wicklungslage (72, 92, 112 oder 132) benachbarte Wicklungen sind, wobei die erste Wicklungslage (72, 92, 112 oder 132) Rinnen zwischen den benachbarten Wicklungen aufweist, und wobei die Wicklungen der zweiten Wicklungslage (74, 94, 114 oder 134) die Rinnen zwischen den Wicklungen der ersten Wicklungslage (72, 92, 112 oder 132) einnehmen.

3. Faseroptische Spule nach Anspruch 1, wobei die erste (72, 92, 112 oder 132) und zweite (74, 94, 114 oder 134) Wicklungslage auf einen Kern gewickelt sind.

4. Faseroptische Spule nach Anspruch 1, wobei die erste (72, 92, 112 oder 132) und zweite (74, 94, 114 oder 134) Wicklungslage freistehend sind.

5. Faseroptische Spule nach Anspruch 4, wobei die Wicklungen der ersten (72, 92, 112 oder 132) und zweiten (74, 94, 114 oder 134) Wicklungslage durch einen Klebstoff miteinander verbunden sind.

6. Faseroptische Spule nach Anspruch 1, wobei die Wicklungen der ersten (72, 92, 112 oder 132) und zweiten (74, 94, 114 oder 134) Wicklungslage in einem Abfühlweg optisch verbunden sind.

7. Faseroptische Spule nach Anspruch 1, außerdem umfassend dritte (76, 96, 116 oder 136), vierte (78, 98, 118 oder 138) und fünfte (80, 100, 120 oder 140) Wicklungslagen, wobei die erste Wicklungslage (72, 92, 112 oder 132) aus einem ersten Abschnitt der optischen Faser gewickelt ist, wobei der erste Abschnitt der optischen Faser den ersten Durchmesser aufweist, wobei die erste Wicklungslage (72, 92, 112 oder 132) Rinnen aufweist, wobei die zweite Wicklungslage (74, 94, 114 oder 134) aus einem zweiten Abschnitt der optischen Faser gewickelt ist, wobei der zweite Abschnitt der optischen Faser den zweiten Durchmesser aufweist, wobei die zweite Wicklungslage (74, 94, 114 oder 134) Rinnen aufweist, wobei die Wicklungen der zweiten Wicklungslage (74, 94, 114 oder 134) die Rinnen der ersten Wicklungslage (72, 92, 112 oder 132) einnehmen, wobei die dritte Wicklungslage (76, 96, 116 oder 136) aus dem zweiten Abschnitt der optischen Faser gewickelt ist, wobei die dritte Wicklungslage (76, 96, 116 oder 136) Rinnen aufweist, wobei die Wicklungen der dritten Wicklungslage (76, 96, 116 oder 136) die Rinnen der zweiten Wicklungslage (74, 94, 114 oder 134) einnehmen, wobei die vierte Wicklungslage (78, 98, 118 oder 138) aus dem zweiten Abschnitt der optischen Faser gewickelt ist, wobei die vierte Wicklungslage (78, 98, 118 oder 138) Rinnen aufweist, wobei die Wicklungen der vierten Wicklungslage (78, 98, 118 oder 138) die Rinnen der dritten Wicklungslage (76, 96, 116 oder 136) einnehmen, wobei die fünfte Wicklungslage (80, 100, 120 oder 140) aus dem zweiten Abschnitt der optischen Faser gewickelt ist, und wobei die Wicklungen der fünften Wicklungslage (80, 100, 120 oder 140) die Rinnen der vierten Wicklungslage (78, 98, 118 oder 138) einnehmen.

8. Faseroptische Spule nach Anspruch 7, wobei die erste (72, 92, 112 oder 132), zweite (74, 94, 114 oder 134), dritte (76, 96, 116 oder 136), vierte (78, 98, 118 oder 138) und fünfte (80, 100, 120 oder 140) Wicklungslage auf einen Kern gewickelt sind.

9. Faseroptische Spule nach Anspruch 7, wobei die erste (72, 92, 112 oder 132), zweite (74, 94, 114 oder 134), dritte (76, 96, 116 oder 136), vierte (78, 98, 118 oder 138) und fünfte (80, 100, 120 oder 140) Wicklungslage freistehend sind.

10. Faseroptische Spule nach Anspruch 9, wobei die Wicklungen der ersten (72, 92, 112 oder 132), zweiten (74, 94, 114 oder 134), dritten (76, 96, 116 oder 136), vierten (78, 98, 118 oder 138) und fünften (80, 100, 120 oder 140) Wicklungslage durch einen Klebstoff miteinander verbunden sind.

11. Faseroptische Spule nach Anspruch 7, wobei die Wicklungen der ersten (72, 92, 112 oder 132), zweiten (74, 94, 114 oder 134), dritten (76, 96, 116 oder 136), vierten (78, 98, 118 oder 138) und fünften (80, 100, 120 oder 140) Wicklungslage in einem Abfühlweg optisch verbunden sind.

12. Faseroptische Spule nach Anspruch 7, wobei die Wicklungen der -zweiten (74, 94, 114 oder 134), dritten (76, 96, 116 oder 136), vierten (78, 98, 118 oder 138) und fünften (80, 100, 120 oder 140) Wicklungslage, aber nicht die Wicklungen der ersten Wicklungslage (72, 92, 112 oder 132) in einem Abfühlweg optisch verbunden sind.

13. Faseroptische Spule nach Anspruch 7, wobei die erste (72, 92, 112 oder 132), zweite (74, 94, 114 oder 134), dritte (76, 96, 116 oder 136), und vierte (78, 98, 118 oder 138) Wicklungslage so gewickelt sind, dass sie ein Quadrupol formen.

14. Faseroptische Spule nach Anspruch 7, wobei die zweite (74, 94, 114 oder 134), dritte (76, 96, 116 oder 136), vierte (78, 98, 118 oder 138) und fünfte (80, 100, 120 oder 140) Wicklungslage so gewickelt sind, dass sie ein Quadrupol formen.

15. Faseroptische Spule nach Anspruch 7, wobei die zweite (74, 94, 114 oder 134), dritte (76, 96, 116 oder 136), vierte (78, 98, 118 oder 138) und fünfte (80, 100, 120 oder 140) Wicklungslage in einem durchschossenen Wickelmuster gewickelt sind.

16. Faseroptische Spule nach Anspruch 1 und 7, wobei die Wicklungen der ersten Wicklungslage (72, 92, 112 oder 132) sich berühren.

17. Faseroptische Spule nach Anspruch 1 und 7, wobei die erste Wicklungslage (72, 92, 112 oder 132) eine radial innerste Wicklungslage ist.

18. Faseroptische Spule nach Anspruch 1, außerdem umfassend dritte (136) bis neunte (148) Lagen mit benachbarten Wicklungen, die aus einer optischen Faser mit dem zweiten Durchmesser gewickelt sind, wobei die zweite bis neunte Lage mit benachbarten Wicklungen aufeinanderfolgend über der ersten Lage (132) mit benachbarten Wicklungen gewickelt sind.

19. Faseroptische Spule nach Anspruch 18, wobei die Wicklungen der ersten Wicklungslage (132) sich berühren.

20. Faseroptische Spule nach Anspruch 18, wobei die erste (132) bis neunte (148) Wicklungslage auf einen Kern gewickelt sind.

21. Faseroptische Spule nach Anspruch 18, wobei die erste (132) bis neunte (148) Wicklungslage freistehend sind.

22. Faseroptische Spule nach Anspruch 21, wobei die Wicklungen der ersten (132) bis neunten (148) Wicklungslage durch einen Klebstoff miteinander verbunden sind.

23. Faseroptische Spule nach Anspruch 18, wobei die Wicklungen der ersten (132) bis neunten (148) Wicklungslage in einem Abfühlweg optisch verbunden sind.

24. Faseroptische Spule nach Anspruch 18, wobei die Wicklungen der zweiten (134) bis neunten (148) Wicklungslage, aber nicht die Wicklungen der ersten Wicklungslage (132) in einem Abfühlweg optisch verbunden sind.

25. Faseroptische Spule nach Anspruch 18, wobei die zweite (134), dritte (136), vierte (138) und fünfte (140) Wicklungslage als ein erstes Quadrupol gewickelt sind, und wobei die sechste (142), siebte (144), achte (146) und neunte (148) Wicklungslage als ein zweites Quadrupol gewickelt sind.

26. Faseroptische Spule nach Anspruch 25, wobei das zweite Quadrupol eine Umkehr des ersten Quadrupols ist.

27. Faseroptische Spule nach Anspruch 18, wobei die erste (132), zweite (134), dritte (136) und vierte (138) Wicklungslage als ein erstes Quadrupol gewickelt sind, und wobei die fünfte (140), sechste (142), siebte (144) und achte (146) Wicklungslage als ein zweites Quadrupol gewickelt sind.

28. Faseroptische Spule nach Anspruch 27, wobei das zweite Quadrupol eine Umkehr des ersten Quadrupols ist.

29. Faseroptische Spule nach Anspruch 18, wobei mindestens eine der zweiten (134) bis neunten (148) Wicklungslagen in einem durchschossenen Wickelmuster gewickelt ist.

30. Faseroptische Spule nach Anspruch 18, wobei die zweite (134) bis neunte (148) Wicklungslage in einem durchschossenen Wickelmuster gewickelt sind.

31. Faseroptische Spule nach Anspruch 18, wobei die erste Wicklungslage (132) eine radial innerste Wicklungslage ist.

32. Faseroptische Spule nach Anspruch 18, wobei die optische Faser mit dem ersten Durchmesser mit einer optischen Faser verspleißt ist, die den zweiten Durchmesser aufweist.

33. Faseroptische Spule nach Anspruch 18, wobei die die optische Faser mit dem ersten Durchmesser ein erweiterter Abschnitt der optischen Faser ist, die den zweiten Durchmesser aufweist.

## Revendications

1. Bobine de fibre optique (70, 90, 110 ou 130) enroulée à partir d'une fibre optique, dans laquelle la bobine de fibre optique (70, 90, 110 ou 130) a une première (72, 92, 112 ou 132) et une seconde (74, 94, 114 ou 134) couches de tours enroulés à partir de la fibre optique, dans laquelle la fibre optique dans la première couche de tours (72, 92, 112 ou 132) a un premier diamètre, dans laquelle les tours de la seconde couche de tours (74, 94, 114 ou 134) sont enroulés autour des tours de la première couche de tours, dans laquelle la fibre optique dans la seconde couche de tours (74, 94, 114 ou 134) a un second diamètre, la bobine de fibre optique (70, 90, 110 ou 130) étant **caractérisée en ce que** :
le premier diamètre est supérieur au second diamètre de manière à empêcher les tours de la seconde couche (74, 94, 114 ou 134) de se toucher sensiblement entre eux.

2. Bobine de fibre optique selon la revendication 1, dans laquelle les tours de la première couche de tours (72, 92, 112 ou 132) sont des tours adjacents, dans laquelle la première couche de tours (72, 92, 112 ou 132) a des vallées entre les tours adjacents, et dans laquelle les tours de la seconde couche de tours (74, 94, 114 ou 134) occupent les vallées entre les tours adjacents de la première couche de tours (72, 92, 112 ou 132).

3. Bobine de fibre optique selon la revendication 1, dans laquelle la première (72, 92, 112 ou 132) et la seconde (74, 94, 114 ou 134) couches de tours sont enroulées sur un moyeu.

4. Bobine de fibre optique selon la revendication 1, dans laquelle la première (72, 92, 112 ou 132) et la seconde (74, 94, 114 ou 134) couches de tours sont autonomes.

5. Bobine de fibre optique selon la revendication 4, dans laquelle les tours de la première (72, 92, 112 ou 132) et de la seconde (74, 94, 114 ou 134) couches de tours sont liés ensemble par un adhésif.

6. Bobine de fibre optique selon la revendication 1, dans laquelle la première (72, 92, 112 ou 132) et la seconde (74, 94, 114 ou 134) couches de tours sont connectées optiquement dans un chemin de détection.

7. Bobine de fibre optique selon la revendication 1 comprenant en outre une troisième (76, 96, 116 ou 136), une quatrième (78, 98, 118 ou 138) et une cinquième (80, 100, 120 ou 140) couches de tours, dans laquelle la première couche de tours (72, 92, 112 ou 132) est enroulée à partir d'une première portion de fibre optique, dans laquelle la première portion de fibre optique a le premier diamètre, dans laquelle la première couche de tours (72, 92, 112 ou 132) a des vallées, dans laquelle la seconde couche de tours (74, 94, 114 ou 134) est enroulée à partir d'une seconde portion de fibre optique, dans laquelle la seconde portion de fibre optique a le second diamètre, dans laquelle la seconde couche de tours (74, 94, 114 ou 134) a des vallées, dans laquelle les tours de la seconde couche de tours (74, 94, 114 ou 134) occupent les vallées de la première couche de tours (72, 92, 112 ou 132), dans laquelle la troisième couche de tours (76, 96, 116 ou 136) est enroulée à partir de la seconde portion de fibre optique, dans laquelle la troisième couche de tours (76, 96, 116 ou 136) a des vallées, dans laquelle les tours de la troisième couche de tours (76, 96, 116 ou 136) occupent les vallées de la seconde couche de tours (74, 94, 114 ou 134), dans laquelle la quatrième couche de tours (78, 98, 118 ou 138) est enroulée à partir de la seconde portion de fibre optique, dans laquelle la quatrième couche de tours (78, 98, 118 ou 138) a des vallées, dans laquelle les tours de la quatrième couche de tours (78, 98, 118 ou 138) occupent les vallées de la troisième couche de tours (76, 96, 116 ou 136), dans laquelle la cinquième couche de tours (80, 100, 120 ou 140) est enroulée à partir de la seconde portion de fibre optique, et dans laquelle les tours de la cinquième couche de tours (80, 100, 120 ou 140) occupent les vallées de la quatrième couche de tours (78, 98, 118 ou 138).

8. Bobine de fibre optique selon la revendication 7, dans laquelle la première (72, 92, 112 ou 132), la seconde (74, 94, 114 ou 134), la troisième (76, 96, 116 ou 136), la quatrième (78, 98, 118 ou 138) et la cinquième (80, 100, 120 ou 140) couches de tours sont enroulées sur un moyeu.

9. Bobine de fibre optique selon la revendication 7, dans laquelle la première (72, 92, 112 ou 132), la seconde (74, 94, 114 ou 134), la troisième (76, 96, 116 ou 136), la quatrième (78, 98, 118 ou 138) et la cinquième (80, 100, 120 ou 140) couches de tours sont autonomes.

10. Bobine de fibre optique selon la revendication 9, dans laquelle les tours de la première (72, 92, 112 ou 132), de la seconde (74, 94, 114 ou 134), de la troisième (76, 96, 116 ou 136), de la quatrième (78, 98, 118 ou 138) et de la cinquième (80, 100, 120 ou 140) couches de tours sont liés ensemble par un adhésif.

11. Bobine de fibre optique selon la revendication 7, dans laquelle les tours de la première (72, 92, 112 ou 132), de la seconde (74, 94, 114 ou 134), de la troisième (76, 96, 116 ou 136), de la quatrième (78, 98, 118 ou 138) et de la cinquième (80, 100, 120 ou 140) couches de tours sont connectés optiquement dans un chemin de détection.

12. Bobine de fibre optique selon la revendication 7, dans laquelle les tours de la seconde (74, 94, 114 ou 134), de la troisième (76, 96, 116 ou 136), de la quatrième (78, 98, 118 ou 138) et de la cinquième (80, 100, 120 ou 140) couches de tours, mais pas les tours de la première couche de tours (72, 92, 112 ou 132), sont connectés optiquement dans un chemin de détection.

13. Bobine de fibre optique selon la revendication 7, dans laquelle la première (72, 92, 112 ou 132), la seconde (74, 94, 114 ou 134), la troisième (76, 96, 116 ou 136) et la quatrième (78, 98, 118 ou 138) couches de tours sont enroulées de manière à former un quadripôle.

14. Bobine de fibre optique selon la revendication 7, dans laquelle la seconde (74, 94, 114 ou 134), la troisième (76, 96, 116 ou 136), la quatrième (78, 98, 118 ou 138) et la cinquième (80, 100, 120 ou 140) couches de tours sont enroulées de manière à former un quadripôle.

15. Bobine de fibre optique selon la revendication 7, dans laquelle la seconde (74, 94, 114 ou 134), la troisième (76, 96, 116 ou 136), la quatrième (78, 98, 118 ou 138) et la cinquième (80, 100, 120 ou 140) couches de tours sont enroulées dans un motif de bobinage imbriqué.

16. Bobine de fibre optique selon les revendications 1 et 7, dans laquelle les tours de la première couche de tours (72, 92, 112 ou 132) se touchent.

17. Bobine de fibre optique selon les revendications 1 et 7, dans laquelle la première couche de tours (72, 92, 112 ou 132) est une couche de tours intérieure radialement.

18. Bobine de fibre optique selon la revendication 1 comprenant en outre des troisième (136) à neuvième (148) couches de tours adjacents enroulées à partir d'une fibre optique ayant le second diamètre, dans laquelle les seconde à neuvième couches de tours adjacents sont enroulées successivement sur la première couche (132) de tours adjacents.

19. Bobine de fibre optique selon la revendication 18, dans laquelle les tours de la première couche de tours (132) se touchent.

20. Bobine de fibre optique selon la revendication 18, dans laquelle les première (132) à neuvième (148) couches de tours sont enroulées sur un moyeu.

21. Bobine de fibre optique selon la revendication 18, dans laquelle les première (132) à neuvième (148) couches de tours sont autonomes.

22. Bobine de fibre optique selon la revendication 21, dans laquelle les tours des première (132) à neuvième (148) couches de tours sont liés ensemble par un adhésif.

23. Bobine de fibre optique selon la revendication 18, dans laquelle les tours des première (132) à neuvième (148) couches de tours sont connectés optiquement dans un chemin de détection.

24. Bobine de fibre optique selon la revendication 18, dans laquelle les tours des seconde (134) à neuvième (148) couches de tours, mais pas les tours de la première couche de tours (132), sont connectés optiquement dans un chemin de détection.

25. Bobine de fibre optique selon la revendication 18, dans laquelle les seconde (134), troisième (136), quatrième (138) et cinquième (140) couches de tours sont enroulées comme un premier quadripôle, et dans laquelle les sixième (142), septième (144), huitième (146) et neuvième (148) couches de tours sont enroulées comme un second quadripôle.

26. Bobine de fibre optique selon la revendication 25, dans laquelle le second quadripôle est un inverse du premier quadripôle.

27. Bobine de fibre optique selon la revendication 18, dans laquelle les première (132), seconde (134), troisième (136) et quatrième (138) couches de tours sont enroulées comme un premier quadripôle, et dans laquelle les cinquième (140), sixième (142), septième (144) et huitième (146) couches de tours sont enroulées comme un second quadripôle.

28. Bobine de fibre optique selon la revendication 27, dans laquelle le second quadripôle est un inverse du premier quadripôle.

29. Bobine de fibre optique selon la revendication 18, dans laquelle au moins une des seconde (134) à neuvième (148) couches de tours est enroulée dans un motif de bobinage imbriqué.

30. Bobine de fibre optique selon la revendication 18, dans laquelle les seconde (134) à neuvième (148) couches de tours sont enroulées dans un motif de bobinage imbriqué.

31. Bobine de fibre optique selon la revendication 18, dans laquelle la première couche de tours (132) est une couche de tours intérieure radialement.

32. Bobine de fibre optique selon la revendication 18, dans laquelle la fibre optique ayant le premier diamètre est épissée sur la fibre optique ayant le second diamètre.

33. Bobine de fibre optique selon la revendication 18, dans laquelle la fibre optique ayant le premier diamètre est une portion grossie de la fibre optique ayant le second diamètre.
